# EUROPÄISCHE PATENTANMELDUNG

(11) **EP 4 606 847 A1**
(43) Veröffentlichungstag der Anmeldung: **27.08.2025**
(21) Anmeldenummer: 24159202.1
(22) Anmeldetag: 22.02.2024
(51) Int. Cl.: C08J 5/18, B32B 7/12, B32B 27/08, B32B 27/10, B32B 27/30, B32B 27/32, B32B 27/36, C01B 33/20, C01B 33/22, C01B 33/38, C08J 7/04, C08J 7/043, C08J 7/048, C08K 3/34, C09D 1/02

(54) **MEHRSCHICHTFOLIEN AUS PVOH**

(71) Anmelder: Tchibo GmbH, 22297 Hamburg (DE)
(72) Erfinder: BÖLZ, Uwe, 82327 Tutzing (DE)
(74) Vertreter: Frei Patent Attorneys

(57) **Zusammenfassung**

Die vorliegende Erfindung betrifft Folien aus PVOH und Schichtsilikaten, die insbesondere zur Herstellung von Lebensmittelverpackungen geeignet ist. Die Folie kann dabei zur Herstellung einer Schicht einer mehrschichtigen Verpackung verwendet werden. Die Folie kann dabei sowohl eine Gas- als auch eine Wasserbarriere bilden und kann insbesondere eine hervorragende Haftung zwischen Schichten vermitteln.

## Beschreibung

Die vorliegende Erfindung betrifft Folien, die insbesondere zur Herstellung von Lebensmittelverpackungen geeignet sind. Die Folie kann dabei zur Herstellung einer Schicht einer mehrschichtigen Verpackung verwendet werden. Die Folie kann dabei sowohl eine Gas- als auch eine Wasserbarriere bilden und kann insbesondere eine hervorragende Haftung zwischen Schichten vermitteln, die jedoch im Recyclingprozess leicht wieder gelöst werden kann.

Das weit verbreitete und wichtige Prinzip der Nachhaltigkeit gilt auch für Verpackungsmaterialien. Es gibt dabei verschiedene Ansätze. Einer ist die Verwendung von Biopolymeren. Ein anderer Ansatz ist ein recyclingfreundliches Design, also ein Aufbau der Verpackung, der hochkomplexe, energieintensive und aufwendige Behandlungsverfahren während des Recyclings spart, nach der Trennung zu sortenreinen, direkt wieder einsetzbaren Rohstoffen führt und den Gesamtprozess so wirtschaftlich und perfekt nachhaltig d. h. zum Kreislaufprozess macht. Dabei ist es wichtig, dass sich die Materialien möglichst vollständig zu sortenreinen Sekundärrohstoffen aufbereiten lassen. Bei mehrschichtigen Materialien ist es daher wichtig, dass man die einzelnen Rohstoffe möglichst rein voneinander trennen kann, ohne dabei viel Energie einsetzen zu müssen. Auch ist es von Vorteil, wenn die gewünschten Eigenschaften einer Verpackung durch möglichst wenige Schichten bzw. Materialien erhalten werden.

Natürlich ist es auch bei einem recyclingfreundlichen Design von Verpackungen weiterhin ein Ziel soweit wie möglich Biopolymere anstatt fossil basierter Polymere einzusetzen, damit auch beim nicht «ordnungsgemäßen Entsorgen» kein Mikroplastik in der Natur freigesetzt wird. Als Biopolymer oder biobasiertes Polymer gelten auf erneuerbaren Ressourcen basierende Polymere oder Polymere, die biologisch abbaubar sind. Der am häufigsten verfügbare, erneuerbare Rohstoff ist Zellulose, die hauptsächlich aus Holz, Baumwolle und einjährigen Pflanzen gewonnen wird. Zellulose hat jedoch inhärente Nachteile, die ihre Verwendung einschränken: schlechte Löslichkeit in gängigen Lösungsmitteln, was die Verwendung als Beschichtung erschwert, und die fehlende Thermoplastizität, die für die direkte Extrusion erforderlich ist. Darüber hinaus ist Cellulose hygroskopisch und nimmt in einem Adsorption-Desorptionsgleichgewicht, abhängig von der jeweils vorhandenen relativen Feuchte, mit Wasserdampf bzw. Wasser auf, was bei Aufnahme zu einer Volumen-Quellung bei Abgabe zu Volumenschrumpf führt. Sie hat deshalb zudem weder eine hohe Gas- noch eine Aromabarriere. Vor allem letzteres behindert die Verwendung von Materialien auf Zellulosebasis in Verpackungsanwendungen für feuchte Lebensmittel oder feuchte Umgebungen. Um diese Nachteile zu überwinden, wird Zellulose mit Barriere-Schichten kombiniert. Sie können die hohen Anforderungen (Schutz gegen Feuchtigkeit, Wasser und Fett sowie Widerstand gegen Sauerstoffdurchlässigkeit (OTR)) erreichen und zudem die Haltbarkeitsanforderungen erfüllen. Allerdings sind diese Schichten im Recyclingprozess oft störend, da sie nicht vollständig vom Trägermaterial ablösbar bzw. nach Ablösung schlecht oder nur mit großem Aufwand abtrennbar sind.

Aufgrund der guten Barriereeigenschaft gegen Sauerstoff, CO₂ und andere polare, gasförmige/flüchtige Verbindungen wie z. B. Aromastoffe wird Polyvinylalkohol (PVOH) oft als Barriere-Schicht in einem zellulosebasierten Mehrschichtsystem für Lebensmittelverpackungen verwendet, da es sich im Recyclingprozess im zugegebenen Wasser rückstandsfrei auflöst (keine Mikroplastikbildung im Rezyklat oder Waschwasser). Ein Nachteil ist seine fehlende Barriere gegenüber Wasserdampf in den bisherigen Anwendungen.

Im Regelfall wird durch Vernetzung (Crosslinking) die Widerstandsfähigkeit gegen Wasser verbessert. Allerdings verringert sich je nach Vernetzungsdichte auch die Barrierewirkung gegenüber Gasen und die Geschwindigkeit der Abbaubarkeit. Um gute Wasserbeständigkeit mit hohem Barriereniveau zu kombinieren, kann alternativ ein Metallkomplexbildner eingesetzt werden. Dies führt jedoch zur reversiblen Netzwerkbildung ist wegen der Anreicherung jener Metallkomplexbildner im Waschwasser aus ökologischem Gründen problematisch und verursacht deutlichen Kosten bei der Abtrennung und Entsorgung. Man kann auch unpolare Wasserdampfsperrschichten mit PVOH-Schichten kombinieren. Allerdings lassen sich die unpolaren Wasserdampfsperrschichten nur schlecht mit polarem PVOH aufeinander aufbringen. Durch Vorbehandlung der unpolaren Oberflächen mittels Corona-(Plasma-)Vorbehandlung bzw. dem Einsatz von Haftvermittlern lassen sich gute Haftungswerte erreichen. Dies bedeutet jedoch oft mehr Aufwand und damit mehr Kosten.

Die Aufgabe der Erfindung ist es eine verbesserte Sauerstoff-Barriere für Verpackungen und insbesondere Lebensmittelverpackungen bereitzustellen, die gleichzeitig beim Recycling der Verpackungen nicht stört bzw. dieses sogar verbessert oder erleichtert.

Mindestens einen dieser Aspekte der Aufgabe löst eine Folie die aus
2 - 95 Gew. % Polyvinylalkohol
3 - 70 Gew. % eines Schichtsilikats, einer Mischung aus Schichtsilikaten oder vergleichbaren Minerals
0 - 30 Gew. % Weichmacher und/oder weitere Additive und optional Wasser
besteht, wobei das Schichtsilikat bzw. die Mischung aus Schichtsilikaten in Form von Mikro- und Nanopartikeln vorliegt. Die Partikel sind bevorzugt plättchenförmig. Dies heisst, sie sind dünn aber flächig. Anders ausgedrückt sind die Länge und Breite der Partikel grösser als Ihre Dicke. Die Folie ist für eine Vielzahl von Verpackungen und besonders für die Herstellung von Lebensmittelverpackungen geeignet.

Eine Ausführungsform der vorliegenden Erfindung betrifft Folien, insbesondere für die Herstellung von Lebensmittelverpackungen, umfassend
30 - 89 Gew. % Polyvinylalkohol
10 - 50 Gew. % eines Schichtsilikats oder einer Mischung aus Schichtsilikaten
1 - 30 Gew. % eines Weichmachers
dadurch gekennzeichnet, dass das Schichtsilikat bzw. die Mischung aus Schichtsilikaten in Form von Mikropartikeln und Nanopartikeln vorliegt.

Die erfindungsgemässen Folien können auch in Form einer Beschichtung auf einem Trägermaterial oder in Form einer Schicht eines mehrschichtigen Materials, insbesondere eines mehrschichtigen Verbundmaterials, bzw. einer mehrschichtigen Verpackung vorliegen.

Je nachdem welche der positiven Eigenschaften der Folie im Vordergrund stehen, können die Mengen an Polyvinylalkohol und Schichtsilikat variiert werden. Höhere Mengen an Polyvinylalkohol erhöhen z.B. v. a. in Kombination mit geeigneten Weichmachern (inkl. Wasser) die Klebrigkeit und Elastizität, verringern aber die Barrierewirkung der mineralischen Additive. Die Schichtsilikate haben grundsätzlich aufgrund ihrer chemischen Zusammensetzung mit vielen oberflächlich vorhandenen OH-Funktionen einen positiven Einfluss auf die Haftung zu polaren Untergründen. Die Folie kann daher 2 - 95 Gew. % Polyvinylalkohol, bevorzugt 20 - 80 Gew.% Polyvinylalkohol, bevorzugt 30 - 70 Gew.% Polyvinylalkohol und weiter bevorzugt 40 - 65 Gew.% Polyvinylalkohol enthalten.

Polyvinylalkohol (PVOH,) ist dabei ein synthetisches Polymer des Vinylalkohols, der nicht als freies Monomer existiert und daher durch mehr oder weniger vollständige Hydrolyse aus Polyvinylestern hergestellt wird. Charakteristisch für Polyvinylalkohole ist die Vinylalkohol-Einheit [CH₂CH(OH)]ₙ. Polyvinylalkohol ist in der Regel leicht verzweigt und weist einen Polymerisationsgrad von etwa 500 bis 2500 auf. Polyvinylalkohole Polymere werden gewöhnlich durch den Austausch der Acetatgruppen von Polyvinylacetat durch Hydroxylgruppen, z.B. durch Hydrolyse oder Alkoholyse, hergestellt. Der Prozentsatz der durch Hydroxylgruppen ersetzten Acetatgruppen ist der Hydrolysegrad des erzeugten PVOH und kennzeichnet den Prozentsatz der im PVOH vorhandenen Hydroxylgruppen von den gesamten möglichen Hydroxylgruppen. Die vorliegende Erfindung umfasst unter anderem Folien deren PVOH einen Hydrolysegrad von 60 bis 98 % aufweist, und bevorzugt von 70 bis 95% und weiter bevorzugt von 75 bis 90%.

PVOH ist je nach Hydrolysegrad ein wasserlöslicher und in wässriger Umgebung biologisch abbaubarer Kunststoff. PVOH-Kunststoffe zeichnen sich durch eine hohe Reißfestigkeit und Elastizität aus. Diese Eigenschaften sind abhängig von der Luftfeuchtigkeit, da der Kunststoff Wasser absorbiert. Je nach Zusammensetzung weisen Sie eine kontrollierbare Wasserauflösungstemperatur von 5-90 °C auf. Es ist bevorzugt, wenn man mit dem PVOH der vorliegenden Erfindung bei 20 °C eine mindestens 4% Lösung in Wasser herstellen kann. Eine mögliche Ausgestaltung der Folie der vorliegenden Erfindung ist bei einer Temperatur von maximal 40°C, bevorzugt 20°C, in Wasser löslich. In einer Ausführungsform kann sich der PVOH-Anteil der Folie in Wasser komplett auflösen. In gelöster Form kann es verarbeitet und zur Wiederverwendung zurückgewonnen werden oder alternativ durch die Einwirkung von Mikroorganismen und Bakterien vollständig zu Wasser (H₂O) und Kohlenstoffdioxid (CO₂) abgebaut werden. Dabei entstehen aufgrund der chemischen Zusammensetzung keinerlei toxische Zwischenverbindungen Im Gegensatz zu nicht abbaubaren Polymeren, egal ob fossil oder biobasiert, erzeugen einmal aufgelöste wasserlösliche PVOH-Granulate und Produkte kein Mikroplastik.

Als Schichtsilikate (auch Blattsilikate, Phyllosilikate) bezeichnet man Silikate, deren Silikatanionen aus Schichten eckenverknüpfter SiO₄-Tetraeder bestehen. Diese Schichten oder Doppelschichten sind untereinander nicht über weitere Si-O-Bindungen zu Gerüsten verknüpft. Mögliche Schichtsilikate für die erfindungsgemäße Folie sind Bentonit, Montmorillonit, Hektonit, Pyrophyllit Al₂[(OH)₂|Si₄O₁₀], Apophyllit, Muskovit, Phlogopit und Talk, wobei Talk aufgrund seiner guten Verfügbarkeit bevorzugt ist. Auch Montmorillonit ist gut geeignet.

Eine Ausführungsform bezieht sich auf Folien wobei das Schichtsilikat in Form von Mirco- und Nanopartikeln als Mischung aus Talkum und einem verwandten ähnlichen Schichtsilikat, wie Montmorillonit, vorliegt, wobei die Mikropartikel aus Talkum und die Nanopartikel aus einem anderen Schichtsilikat wie Montmorillonit, bestehen können.

Das Mineral Talk, in pulverisierter Form auch als Talkum bekannt, hat die chemische Zusammensetzung Mg₃[(OH)2|Si₄O₁₀] und ist damit chemisch gesehen ein Magnesium silikathydrat.

Die Mikropartikel- und Nanopartikelsynthese von Talk kann anhand von physikalischen und chemischen Methoden durchgeführt werden. Bei physikalischen Methoden werden Partikel durch Größenreduzierung des Ausgangsmaterials, z.B. durch Zermahlen nach dem Abbau, erzeugt (Top-down-Ansatz). Talk kann aber auch synthetisch hergestellt werden (Bottom-up-Ansatz). Es hat sich als vorteilhaft erwiesen, wenn die verwendeten Nanopartikel chemisch synthetisiert wurden, da eine gleichmässigere Grössenverteilung und eine bessere Schichtung erreicht werden können.

Um die Eigenschaften der Folie gezielt beeinflussen zu können, kann man die Mengen der Bestandteile anpassen. Aufgrund seines hydrophilen Charakters ist Polyvinylalkohol gut als Barriere gegen Fette und Mineralöle geeignet. Die Wasserstoffbrückenbindungen zwischen den Polymerketten in Verbindung mit der kristallinen Struktur machen Polyvinylalkohol zu einer hervorragenden Barriere gegen Sauerstoff, Stickstoff, Kohlendioxid und organische Lösemittel. Durch eine Verwendung von Schichtsilikaten in einer PVOH-Lösung sind insgesamt höhere Feststoffanteile möglich. Dadurch sind höhere Schichtdicken möglich und die Verfahren zur Herstellung der Beschichtung mit weniger Wasser energiesparend. Es können zudem wesentlich höhere Sauerstoff-Barrierewerte bei vergleichbarer Schichtdicke als mit reinem PVOH erreicht werden. Weiterhin sinkt durch die Zugabe an biobasiertem Weichmacher und natürlichem Mineral der ölbasierte Anteil an der Gesamtmischung erheblich.

Auch die Haftung auf anderen Materialien, insbesondere auch ähnlich modifizierte unpolaren Materialien wird durch die Mischung des PVOH mit den Schichtsilikaten deutlich verbessert. Bei der Herstellung der Folien erreicht man eine höhere Prozessstabilität (durch deutlich verringerte Schaumbildung) und eine geringere Defektbildung. Es kann auch eine stabilere Mischung erzielt werden, d. h. bei hohen Anteilen an Schichtsilikat(en) findet keine Entmischung bzw. Absetzverhalten der Feststoffanteile statt.

Um die Haftvermittlereigenschaften, Feuchtigkeitsbarriere sowie Gasbarriere zu maximieren hat es sich als vorteilhaft erwiesen, wenn die Folie 25 - 70 Gew. % Polyvinylalkohol, bevorzugt 30 - 65 Gew. % Polyvinylalkohol und weiter bevorzugt 35 - 55 Gew. % Polyvinylalkohol. Die Menge an Schichtsilikat(en) (Mikro- und Nanopartikel in Summe) kann zwischen 3 und 70 Gew. %, bevorzugt 10 - 50 Gew. %, bevorzugt 15 - 40 Gew. %, und weiter bevorzugt 18 - 30 Gew. % betragen.

Eine Ausführungsform der Erfindung betrifft Folien wobei die Mikropartikel einen maximalen Durchmesser von 0.3 - 10 µm und die einzelnen Nanopartikel einen maximalen Durchmesser von 100 - 300 nm aufweisen. Die Mikropartikel können genauer durch die maximale und die mittlere (mediane) Partikelgrösse charakterisiert werden. Hier ist es bevorzugt, wenn die Mikropartikel eine maximale Partikelgrösse (d98%) kleiner 15 µm, bevorzugt kleiner 12 µm und weiter bevorzugt kleiner 10 µm aufweisen. Die mediane Partikelgrösse (d50%) kann im Bereich von 0,5 µm bis 5 µm, bevorzugt zwischen 1 µm und 2,5 µm liegen.

Die Dicke der Nanopartikel kann dabei im Bereich von 2 bis 50 nm, bevorzugt 8 - 25 nm und weiter bevorzugt 10 - 20 liegen. Es ist bevorzugt, dass die Nanopartikel eine Dicke in einem Bereich von 5 bis 50 nm und ein Längenverhältnis einer Partikelgröße zur Dicke in einem Bereich von 20.000 bis 5, bevorzugt 5000 bis 20 und im Idealfall 500 bis 50 besitzen. Dies bezieht sich auf einzelne, nicht agglomerierte Nanopartikel.

Das Verhältnis in Gewichtsprozent von Mikro- zu Nanopartikeln in der erfindungsgemäßen Folie bzw. in einzelnen Schichten der Folie oder eines mehrschichtigen Materials kann zwischen 70:30 und 95:5 liegen. Bevorzugt ist dabei ein Bereich von 75:25 und 90:10 bzw. 80:20 und 85:15.

Als Weichmacher dienen Substanzen, die bewirken, dass die Folie bzw. Schichten und daraus hergestellte Materialien, weicher, flexibler und geschmeidiger sind. Sie erhöhen die Plastizität und Erniedrigen die Viskosität.

Weichmacher im Sinne dieser Erfindung können ausgewählt werden aus einer Gruppe bestehend aus Glycerin, Glyzerinester, Sorbit, Propylenglykol, Citronensäuretriethylester und 2-Methyl-1,3-propandiol. Bevorzugt ist Glycerin. Weichmacher, deren Wirkung auf zwischenmolekulare Wechselwirkungen beruhen, sind gegenüber Weichmachern, die über eine Copolymerisation wirken, bevorzugt. Daher wirkt auch enthaltenes restliches (Gleichgewichts-)wasser als Weichmacher.

Die erfindungsgemäße Folie kann neben den bislang genannten Komponenten (PVOH, Schichtsilikat und Weichmacher) auch ein Lösungsmittel, bevorzugt Wasser, sowie weitere Zusatzstoffe enthalten. Eine Zugabe von Wasser vor der Schmelzeverarbeitung kann gezielt bei Verarbeitungstemperaturen deutlich über 100°C durch das Verdampfen bei Druckverlust an der Düse zur Herstellung von Schaumfolien genutzt werden.

Das Lösungsmittel kann bis zu 90 Gewichtsprozent der Zusammensetzung ausmachen, aus welcher die Folie hergestellt wird. Die erfindungsgemässe Folie kann bis zu 15 Gew. % Wasser, bevorzugt bis zu 5 Gew.% und weiter bevorzugt bis zu 2 Gew.% enthalten bzw. einen Wassergehalt von 1 - 15 Gew.% und weiter bevorzugt von 2 bis 10 Gew.% Wasser haben.

Die weiteren Zusatzstoffe können bis zu 2 Gewichtsprozent der erfindungsgemäßen Folie ausmachen. Bevorzugt sind Folien mit weniger als 1 Gew. % nicht explizit genannten Zusatzstoffen bzw. mit einem Zusatzstoffgehalt von 0,1 - 1 Gew.% und weiter bevorzugt von 0,01 bis 0,5 Gew.%. Mögliche Zusatzstoffe sind andere Polymere, Stabilisatoren, wie Lichtschutzmittel, Pigmente und Farbstoffe. Da es aber bei der Optimierung von Recyclingprozessen auch auf die Reinheit von Rezyklaten ankommt, kann es auch von Vorteil sein, wenn keine weiteren Zusatzstoffe vorhanden sind und die Folien nur aus PVOH, Schichtsilikate(n) und einem Weichmacher bestehen.

Eine Ausführungsform betrifft daher Folien, insbesondere für die Herstellung von Lebensmittelverpackungen, enthaltend oder bestehend aus
30 - 70 Gew. % Polyvinylalkohol
15 - 40 Gew. % eines Schichtsilikats oder einer Mischung aus Schichtsilikaten
5 - 30 Gew% Weichmacher
0 - 2 Gew% Zusatzstoffe
dadurch gekennzeichnet, dass das Schichtsilikat bzw. die Mischung aus Schichtsilikaten in Form von Mikropartikeln und Nanopartikeln vorliegt.

Eine weitere Ausführungsform betrifft Folien, insbesondere für die Herstellung von Lebensmittelverpackungen, enthaltend oder bestehend aus
30 - 70 Gew. % Polyvinylalkohol
15 - 30 Gew. % eines Schichtsilikats oder einer Mischung aus Schichtsilikaten
5 - 30 Gew% Weichmacher
0 - 20 Gew% Lösungsmittel, bevorzugt Wasser
dadurch gekennzeichnet, dass das Schichtsilikat bzw. die Mischung aus Schichtsilikaten in Form von Mikropartikeln und Nanopartikeln vorliegt.

Eine weitere Ausführungsform betrifft Folien, insbesondere für die Herstellung von Lebensmittelverpackungen, enthaltend oder bestehend aus
30 - 80 Gew. % Polyvinylalkohol
20 - 50 Gew. % eines Schichtsilikats oder einer Mischung aus Schichtsilikaten
5 - 30 Gew% Weichmacher
0 - 1 Gew% Zusatzstoffe, und
0 - 5 Gew% Lösungsmittel, bevorzugt Wasser
dadurch gekennzeichnet, dass das Schichtsilikat bzw. die Mischung aus Schichtsilikaten in Form von Mikropartikeln und Nanopartikeln vorliegt.

Eine zusätzliche Ausführungsform betrifft Folien, insbesondere für die Herstellung von Lebensmittelverpackungen, enthaltend oder bestehend aus
30 - 70 Gew. %, bevorzugt 55 - 65 Gew. % Polyvinylalkohol
15 - 30 Gew. %, bevorzugt 18 - 25 Gew. % eines Schichtsilikats oder einer Mischung aus Schichtsilikaten
5 - 30 Gew%, bevorzugt 15 - 25 Gew. % Weichmacher, und
0 - 10 Gew% Lösungsmittel, bevorzugt Wasser
dadurch gekennzeichnet, dass das Schichtsilikat bzw. die Mischung aus Schichtsilikaten in Form von Mikropartikeln und Nanopartikeln vorliegt. Diese Folie hat keine weiteren Zusätze ausser unvermeidbaren Verunreinigungen, die weniger als 0,1 Gew. % und bevorzugt weniger als 0,01 Gew.% betragen.

Eine Ausführungsform der Erfindung umfasst eine Folie aus
4 - 40 Gew. % Polyvinylalkohol, bevorzugt 2 Gew.% PVOH
20 - 80 Gew. % eines Schichtsilikats, bevorzugt 8 Gew.% mit einem Verhältnis 3:1 von Nanotalkum zu Mikrotalkum und
0 - 8 Gew% Weichmacher.

Diese Folie kann aus einer Zusammensetzung aus
1 - 10 Gew. % Polyvinylalkohol, bevorzugt 2 Gew.% PVOH
5 - 20 Gew. % eines Schichtsilikats, bevorzugt 8 Gew.% mit einem Verhältnis 3:1 von Nanotalkum zu Mikrotalkum
0 - 2 Gew% Weichmacher, und
80 - 90 Gew% Wasser hergestellt werden.

Diese Folien können sehr dünn hergestellt werden und haben eine sehr gute Sauerstoffbarrriere oder allgemein eine sehr gute Gasbarriere. Sie ist allerdings nur schwer als homogene Beschichtung aufzutragen, und nach dem Trocknen v. a. bei sehr hohen Schichtsilikatanteilen eher spröde. Dies kann mit einer geringen Menge Weichmacher verbessert werden.

Eine Ausführungsform der Erfindung umfasst eine Folie aus
30 - 50 Gew. % Polyvinylalkohol,
40 - 50 Gew. % eines Schichtsilikats oder einer Mischung aus Schichtsilikaten, mit einem Verhältnis 3:1 von Nanopartikeln zu Mikropartikeln und
0 - 10 Gew% Weichmacher.

Diese Folie kann aus einer Zusammensetzung aus
1 - 40 Gew. % Polyvinylalkohol, bevorzugt 15 -20 Gew.% PVOH
5 - 40 Gew. % eines Schichtsilikats, bevorzugt 20 - 30 Gew.% mit einem Verhältnis 3:1 von Nanotalkum zu Mikrotalkum
0 - 10 Gew% Weichmacher, und
50 - 90 Gew% Wasser hergestellt werden.

Eine weitere Ausführungsform der Erfindung umfasst eine Folie aus
30 - 60 Gew. % Polyvinylalkohol,
40- 75 Gew. % eines Schichtsilikats oder einer Mischung aus Schichtsilikaten und
6 - 18 Gew% Weichmacher.

Eine alternative Ausführungsform der Erfindung umfasst eine Folie aus
50 - 75 Gew. % Polyvinylalkohol, bevorzugt 60 - 65 Gew. %
15- 25 Gew. % eines Schichtsilikats oder einer Mischung aus Schichtsilikaten, bevorzugt 18 - 22 Gew. % mit einem Verhältnis 1:3 bis 1:20 von Nanopartikeln zu Mikropartikeln
10 - 25 Gew% Weichmacher bevorzugt Glyzerin und
0 - 5 Gew% Wasser.

Es ist bevorzugt, wenn das Feststoffverhältnis in diesen Folien bei 4:3:1 = PVOH/Weichmacher : Mikropartikel Schichtsilikat(en) : Nanopartikel Schichtsilikat(en) liegt.

Es hat sich gezeigt, dass diese Folien preisgünstige, multifunktionale Barrriereschichten sind. Zudem eignen sie sich, wenn sie als Lösung oder Dispersion aufgebracht werden auch als haftvermittelnde Schichten für mehrschichtige Materialien. Diese Schichten haften gut auf diversen Trägern wie Papier, PET-Folien oder PE/PP-Folien.

Ein anderer Aspekt der vorliegenden Erfindung ist ein Verfahren zum Herstellen der erfindungsgemäßen Folie, umfassend die Schritte:
- Herstellen einer Zusammensetzung aus einer Dispersion von Nanopartikeln eines Schichtsilikats oder einer Mischung aus Schichtsilikaten, einer Dispersion von Mikropartikeln des Schichtsilikats/der Schichtsilikate und einer Lösung von Polyvinylalkohol und einem Weichmacher indem man die Lösung von Polyvinylalkohol und einem Weichmacher mit der Dispersion von Mikropartikeln mischt und die Dispersion von Nanopartikeln hinzufügt und
- Extrusion einer Folie aus der Zusammensetzung.

Die Herstellung der Zusammensetzung für die Herstellung der Folie kann dabei die folgenden Schritte umfassen:
- Bereitstellung einer Dispersion von Nanopartikeln eines Schichtsilikats oder einer Mischung aus Schichtsilikaten
- Bereitstellung einer Dispersion von Mikropartikeln des Schichtsilikats oder einer Mischung aus Schichtsilikaten
- Bereitstellung einer Lösung von Polyvinylalkohol und einem Weichmacher
- Mischen der Lösung von Polyvinylalkohol und einem Weichmacher mit der Dispersion von Mikropartikeln
- Hinzufügen der Dispersion von Nanopartikeln.

Sowohl die Dispersion der Nanopartikel, die Dispersion der Mikropartikel als auch die Lösung des Polyvinylalkohols mit dem Weichmacher nutzen bevorzugt Wasser als Lösungsmittel.

Die Verwendung eines Hochgeschwindigkeitsmixers bei der Herstellung der Dispersion der Nanopartikel und der Dispersion der Mikropartikel sowie bei der Vermischung dieser Dispersionen mit der Lösung von Polyvinylalkohol und Weichmachern hat sich als besonders geeignet herausgestellt. Alternativ kann die Zusammensetzung auch durch folgende Schritte hergestellt werden:
- Bereitstellung einer Dispersion von Nanopartikeln eines Schichtsilikats oder einer Mischung aus Schichtsilikaten
- Bereitstellung der Mikropartikel des Schichtsilikats oder der Mischung aus Schichtsilikaten in Form eines Pulvers
- Bereitstellung einer Lösung von Polyvinylalkohol und einem Weichmacher
- Mischen der Lösung von Polyvinylalkohol und einem Weichmacher mit den pulverförmigen Mikropartikeln unter Rühren
- Hinzufügen der Dispersion von Nanopartikeln.

Mit den beschriebenen Verfahren ist es möglich eine ausreichende Menge Schichtsilikate zuzugeben und eine homogene Verteilung der Partikel zu erreichen, was zu höheren Sauerstoff-Barrierewerte der erzeugten Produkte (Folien) führt.

Alternative Herstellungsverfahren nutzen das Prinzip des Schmelzemischens (= Compoundierung), indem direkt Mikro- und Nanopartikel in eine bereitgestellte PVOH-Schmelze inkl. Weichmacher eingearbeitet wird. Das damit hergestellte, gleichförmige und somit leicht dosierbare Granulat kann für alle gängigen Schmelzeverarbeitungsverfahren wie mehrschichtige Gieß- oder Blasfolien, für Co-Extrusionsbeschichtungen, sowie im Spritzguss eingesetzt werden.

Die Folie kann also auch mittels Thermoformen, Spritzguss oder Blasformen hergestellt werden. Bei der Herstellung eines mehrschichtigen Verbundmaterials kann Folie als Beschichtung einer der anliegenden Schichten (z.B. Papier oder Polymer) hergestellt werden. Bei der Verwendung einer wässrigen Lösung zur Schicht- bzw. Folienbildung kann die noch feuchte Schicht auch als Klebstoff für eine weitere anliegende Schicht verwendet werden. Die erfindungsgemässen Folien können auch durch Coextrusion mit einer anderen Schicht hergestellt werden.

Es kann von Vorteil sein bei der Herstellung der Folien auf Wasser ganz oder zumindest weitestgehend zu verzichten, da dann ein aufwendiger und energieintensiver Trocknungsschritt entfällt. Wenn die Folien aus einer Zusammensetzung ohne Wasser hergestellt werden, können diese z.B. per Schmelzverfahren direkt hergestellt oder auf einen Träger aufgetragen oder per Coextrusion direkt als Barrierezwischenschicht in eine Mehrschichtfolie eingebracht werden. Sie können z.B. mithilfe einer Schlitzdüse als Beschichtung aufgetragen werden. So kann z.B. eine genaue Dicke der Folie bzw. Schicht gezielt eingestellt werden.

Bei der Herstellung eines mehrschichtigen Verbundmaterials kann die erfindungsgemässe Folie als Beschichtung direkt auf diversen vorgelegten Trägerschichten (z.B. Papier oder Polymer), oder auf vorab aufgetragene (z. B. wässrig aufgebrachte) Vorbarriereschichten aufgebracht werden. Bei der Verwendung einer wässrigen Lösung zur Schicht- bzw. Folienbildung kann die noch feuchte Schicht auch als Klebstoff für eine oder mehrere zugeführte, weitere bahnförmige Materialien (Papier, Folie, Alufolie oder Verbundmaterialien) verwendet werden.

Ein weiterer Aspekt der Erfindung ist ein mehrschichtiges Material, wobei mindestens eine Schicht des mehrschichtigen Materials aus einer erfindungsgemäßen Folie besteht. Die Folie kann dabei eine oder mehrere Schichten des Materials bilden.

Die erfindungsgemäßen Folien ermöglichen als Zwischenschicht in einem mehrschichtigen Material allgemein eine saubere Trennung anliegender Schichten. Dies ist dadurch möglich, dass sich die Folie nach einer Zerkleinerung (Schreddern) des Materials, der Verpackungen in kaltem Wasser auflöst. So können die zuvor für die Mehrschicht- bzw. Verbundmaterialien eingesetzten unterschiedlichen Rohstoffe, z. B, unterschiedliche Polymere oder Papier, sauber und sortenrein zuerst voneinander getrennt und nach Separierung (z. B. per Flotation nach Dichte) aufbereitet d. h. je nach Rohstoff granuliert bzw. dispergiert werden. Auch das lösliche PVOH kann inkl. Weichmacher und enthaltenen Materialien per Filtration gereinigt, aufkonzentriert und rezykliert werden. Da Waschschritte mit kaltem Wasser Bestandteil der meisten etablierten Recyclingverfahren sind, müssen diese nicht oder nur wenig verändert werden.

Die weiteren Schichten, die neben der erfindungsgemäßen Folie im mehrschichtigen Material der Erfindung enthalten sein können, können aus Papier, einem Polymer oder einer Polymermischung bestehen. Es können auch weitere Zusatzstoffe enthalten sein. Es ist aber bevorzugt, wenn diese Schichten zu mindestens 95 Gew. %, besser 99 Gew. % aus Papier sind oder zu mindestens 95 Gew. %, besser 99 Gew. % aus einem Polymer bestehen. Die Polymere können Biopolymere bzw. biobasierte Polymere sein. Die Polymere können ausgewählt werden aus der Gruppe umfassend Polyolefine, wie PE (Polyethylen), PP, EEA (Ethylen Ethyl Acrylat Copolymer), Polybutylensuccinat, Polylactid und Polyhydroxyalkanoate, insbesondere Polyhydroxybuttersäure und Poly(3-hydroxybutyrate-co-3-hydroxyhexanoate) oder einer Mischung aus Poly(butylenadipat-co-terephthalat) (PBAT) und Polymilchsäure (PLA).

Polybutylensuccinat (PBS) wird der Gruppe von Polyester zugeordnet. PBS ist ein biologisch abbaubarer Biokunststoff, der industriell (synthetisch) hergestellt wird. PBS entsteht durch eine synthetische Reaktion der Ausgangsstoffe Bersteinsäure und 1,4-Blutandiol. Diese Ausgangsstoffe sind auf zweierlei Weise herstellbar: Fossil und aus Glucose. Wurde PBS in der Vergangenheit noch ausschließlich aus fossilen Rohstoffen gewonnen, kann der Biokunststoff heute, je nach Basis des Rohstoffes, bis zu 100% biobasiert hergestellt werden und ist dann auch biologisch abbaubar. Das Biopolymer Polyhydroxybuttersäure (PHB) ist ein fermentativ herstellbarer Polyester mit Eigenschaften ähnlich denen des petrochemisch erzeugten Kunststoffs Polypropylen. Es kann auf Basis von Zucker und Stärke hergestellt werden, die Synthese ist jedoch auch aus anderen Nährstoffen wie Glycerin und Palmöl möglich. Poly(butylenadipat-co-terephthalat) (PBAT) ist ein biologisch abbaubares und kompostierbares Copolymer aus der Gruppe der Polyester. Polylactide sind synthetische Polymere (Polyestern) Milchsäuremolekülen. Ein bevorzugtes Polymer ist eine Mischung aus Poly(butylenadipat-co-terephthalat) (PBAT) und Polymilchsäure (PLA), insbesondere die Mischungen der ecovio^{®} (PBAT, PLA) Familie von Bayer. Das kompostierbare und überwiegend biobasierte Polymer bietet verschiedene vorteilhafte Eigenschaften, wie eine gute Haftung auf zahlreichen Papier- und Kartontypen, eine Temperaturbeständigkeit bis 100°C.

Es gibt eine Vielzahl von Papierprodukten, die mit einer flüssigkeits- oder gasdichten Beschichtung versehen werden. Ein Aspekt der vorliegenden Erfindung betrifft daher auch mehrschichtige Verbundmaterialien, die eine Papierschicht oder Papiergrundschicht mit einer flüssigkeitsdichten Beschichtung aufweisen, wobei zwischen der Papierschicht und der flüssigkeitsdichten Beschichtung eine erfindungsgemäße Folie liegt.

Die flüssigkeitsdichte Beschichtung kann aus PE oder Copolymeren von Acrylsäureestern mit Ethylen (Ethylene acrylic acid copolymer; EAA), insbesondere Copolymere von Acrylsäureethylestern mit Ethylen (EEA) bestehen. Insbesondere Barrierelacke auf Basis von EAA haben eine sehr gute Wasserdampfbarriere, aber auch den Nachteil, dass sie im Papierrecycling erheblich stören. Somit ist es von Vorteil, wenn in einem sehr frühen Waschschritt der EAA-Lack vollständig vom Papier abtrennbar ist, so dass keine Rückstände im Altpapier verbleiben. Dies kann durch eine erfindungsgemäße Folie bzw. Zwischenschicht erreicht werden, indem diese zwischen dem Papier und dem EAA-Lack aufgetragen wird.

Die erfindungsgemäße Folie kann sich in einem kalten Waschvorgang des Recyclingprozesses auflösen und hinterlässt somit für den weiteren Prozess zwei vollständig voneinander getrennte zuvor anliegende Schichten. Diese Schichten lassen sich danach als reines Rezyklat wiedergewinnen. Rein bedeutet in diesem Zusammenhang, dass es keine Verunreinigungen durch Reste der jeweils anderen Schicht gibt. Die erfindungsgemäße Folie dient zudem auch als Gasbarriere und kann eine gute Haftung vermitteln.

Das mehrschichtige Material kann aus einer Papierschicht mit einer erfindungsgemässen Folie als Barrierebeschichtung und einer flüssigkeitsdichten Beschichtung bzw. allgemeiner einer Siegelschicht bestehen. Dies kann durch Aufbringen verschiedener Polymere erzeugt werden. Bevorzugt sind biobasierte oder bioabbaubare Polymere. Ein bevorzugtes mehrschichtiges Material besteht aus einer ersten Schicht aus Papier, einer Zwischenschicht aus der erfindungsgemäßen Folie und einer zweiten Schicht (der flüssigkeitsdichten Beschichtung bzw. der Siegelschicht) aus einer Mischung aus Poly(butylenadipat-co-terephthalat) (PBAT) und Polymilchsäure (PLA). Alternativ kann die zweite Schicht aus EEA bestehen. Die zweite Schicht kann aber auch aus PVOH- bestehen, z. B. aus einem weniger gut wasserlöslichen PVOH.

Dieses Material ist zur Produktion von papier- und kartonbasierten Verpackungen und Einweggeschirr, wie z.B. Becher, Pappteller oder Einwickelpapier geeignet. Die Verpackungen eignen sich insbesondere auch für Kaffee.

Neben der Möglichkeit der Kompostierung für Verpackungen bietet dieses Material auch die Möglichkeit des Papierrecyclings. Das PVOH und damit die Zwischenschicht aus der erfindungsgemässen Folie löst sich vollständig in einem kalten Waschschritt mit Wasser auf. Dadurch wird die Polymerschicht komplett und ohne Rückstände vom Papier getrennt. Das PVOH kann aus dem Wasser zur Wiederverwertung gewonnen oder gänzlich biologisch abgebaut werden. Nicht in Wasser gelöstes Talkum fällt aus. Reste des Talkums stören bei einer Verwendung der Papierfasern jedoch nicht.

Eine Ausführungsform betrifft das erfindungsgemäße mehrschichtige Material, wobei mindestens eine Schicht des mehrschichtigen Materials aus einer erfindungsgemäßen Folie besteht und die weiteren Schichten ein anderes Polymer aufweisen oder aus diesem bestehen. Dabei können auch diese weiteren Schichten neben dem Polymer eine Mischung von Mikropartikeln und Nanopartikeln eines Schichtsilikats oder einer Mischung aus Schichtsilikaten, insbesondere das gleiche Schichtsilikat/die gleichen Schichtsilikate wie die erfindungsgemäße Folie, aufweisen. Dies erhöht die Haftung zwischen den Schichten. Die Schicht aus der erfindungsgemäßen Folie ist bevorzugt eine Mittelschicht oder Zwischenschicht des Materials, die zwischen weiteren Schichten liegt. Die erfindungsgemäße Folie ist wegen ihrer hervorragenden Haftung zu anderen Materialien als Zwischenschicht besonders geeignet. Es können aber noch zusätzlich Haftvermittlerschichten, z.B. auf PVOH-Basis, vorhanden sein.

Wenn die erfindungsgemäße Folie Glycerin enthält, kann diese Folie im mehrschichtigen Aufbau von dünnen Schichten einer erfindungsgemäßen Folie ohne Glycerin aber mit relativ hohem Anteil Schichtsilikat als Sperrschicht benachbart sein. Diese Sperrschicht kann auf einer Seite oder auf beiden Seiten der Glycerinenthaltenden Folie angebracht sein, so dass ein 4- bis 5-schichtiger Aufbau bestehen kann. Das Schichtsilikat/die Schichtsilikate der dünnen Sperrschicht verhindert eine Migration des Glycerins in weiter aussen liegende (Polymer)schichten.

Das Verfahren zum Herstellen des erfindungsgemäßen mehrschichtigen Materials umfasst bevorzugt eine Coextrusion der verschiedenen Schichten. Diese Schichten werden also bereits bei der Herstellung zusammengefügt. Das hat sich als besonders gut für die Haftung erwiesen, insbesondere, wenn alle Schichten mit den entsprechenden Schichtsilikaten der unterschiedlichen Größe gefüllt sind. Dann ist eine intensive Verpressung der drei Schichten im viskoelastischen Schmelzezustand vorteilhaft um eine gute Haftung zu erreichen. Es können aber auch andere Herstellungsverfahren zum Einsatz kommen.

Ein weiteres bevorzugtes mehrschichtiges Material besteht aus einer ersten Schicht aus einem Polymer oder eine Polymermischung, einer Zwischenschicht aus der erfindungsgemäßen Folie und einer zweiten Schicht aus einem Polymer oder einer Polymermischung. Für die Verpackung von feuchten Lebensmitteln ist es von Vorteil, wenn die erste und die zweite Schicht dabei eine Wasserbarriere bzw. eine Wasserdampfbarriere bilden. Ein bevorzugtes mehrschichtiges Material besteht aus einer ersten Schicht aus PE, einer Zwischenschicht aus der erfindungsgemäßen Folie und einer zweiten Schicht aus PE oder PP. Das PE der ersten und der zweiten Schicht können identisch sein. Die Schichten können aber auch unterschiedliche Typen von PE (HDPE, MDPE, LDPE, LLD-PE) aufweisen.

Je nach dem Polymer das die ersten bzw. zweite Schicht bildet kann auch die Steifigkeit und die Temperaturbeständigkeit des mehrschichtigen Materials eingestellt werden. Hier hat auch die Dicke der einzelnen Schichten einen Einfluss.

Grundsätzlich kann die erfindungsgemäße Folie eine Dicke von 0,5 µm bis 2 mm sein. Dünne, vor allem haftvermittelnde Schichten können 0,5 bis 10 µm dick sein, wohingegen Schichten, die vor allem oder zusätzlich eine Gasbarriere bilden sollen eine Dicke von 10 µm bis 1 mm, bevorzugt 100 µm bis 0,5 mm aufweisen. Die Papierschichten können 100 µm bis 5 mm dick sein. Die weiteren Polymerschichten können 10 µm bis 2 mm dick sein.

Die erste und zweite Schicht, welche die erfindungsgemäße Folie umgeben, können aus PBS und oder PHBH bestehen und eventuell relativ dicke Schichten darstellen.

Dieses mehrschichtige Material ist temperaturbeständig, wasserfest und hat eine hervorragende Gasbarriere.

Das erfindungsgemäße mehrschichtige Material oder die erfindungsgemäße Folie generell und insbesondere das Material mit PBS oder PHBH sind auch geeignet zur Herstellung einer Kapsel für ein Getränkezubereitungssystem, wobei die Kapsel eine Kapselwand umfasst, die das mehrschichtigen Material bzw. die Folie umfasst. Dabei ist die Kapsel bevorzugt eine Kaffeekapsel, die Kaffeepulver enthält. Die erfindungsgemäße Folie dient dabei der Haftvermittlung, bildet aber auch eine hervorragende Barriereschicht, die das Aroma des Kaffees auch vor Zutritt von aromaschädlichem Sauerstoff schützt. Zudem ermöglicht sie eine saubere Auftrennung der Polymere, wenn die anliegenden Schichten aus unterschiedlichen Polymeren hergestellt sind.

Sowohl für Portionskapseln als auch sogenannte pouches (Beutel) für Kaffee sind die mehrschichtigen Materialien dieser Erfindung geeignet. Insbesondere auch die Materialien, die aus Papier, der erfindungsgemäßen Folie als Barriereschicht und einer polymeren Siegelschicht bestehen, genügen den hohen Anforderungen, die an den Schutz des Produkts und das Brühen des Kaffees in Hochdruckkaffeemaschinen gestellt werden. Wenn die Siegelschicht aus einem bioabbaubaren Polymer (EEA, ecovio^{®}) oder einer PVOH-basierten Polymermischung besteht, lassen sie sich zudem kompostieren.

Es hat sich gezeigt, dass die erfindungsgemässen Folien auf Schichten bzw. Folien aus Aluminium oder mit sehr hohem Aluminiumgehalt eine sehr gute Haftung haben. Daher eignen sie sich hervorragend als Haftvermittler zwischen Aluminiumschichten und weiteren Schichten aus Polymeren oder Papier in einem mehrschichtigen Verbundmaterial. Die zugesetzten Schichtsilikate verbessern die Haftung zwischen den einzelnen Schichten. Hinzukommt der bereits beschriebene Effekt, dass sich die einzelnen Schichten sehr rein voneinander trennen lassen, indem die erfindungsgemässe Folie in Wasser aufgelöst wird. Dies ist beim Recycling ein enormer Vorteil.

Ein weiteres bevorzugtes mehrschichtiges Material umfasst daher eine erste Schicht und eine zweite Schicht aus einer erfindungsgemässen Folie sowie eine weitere Schicht, die aus Aluminium besteht, wobei die Schicht aus Aluminium zwischen der ersten und der zweiten Schicht aus der erfindungsgemässen Folie liegt. Zu diesen drei Schichten können noch aussen anliegende Schichten aus unterschiedlichen Polymeren oder Papier hinzukommen. Der Schichtaufbau ist dann von aussen nach innen: Polymer oder Papier/ erfindungsgemässe Folie / Alu / erfindungsgemässe Folie / Polymer.

Geeignete Polymere sind hier u.a.: Polypropylen (auch Cast PolyPropylen - CPP, orientiertes Polypropylen - OPP), Polyethylenterephthalat (PET) und Polyethylen. Dabei ist die innerste Schicht bevorzugt aus PE hergestellt. Mögliche Verbundmaterialien können folgende Schichten (von aussen nach innen) aufweisen:
- PP/ erfindungsgemässe Folie / Alu / erfindungsgemässe Folie / PE
- PET/ erfindungsgemässe Folie / Alu / erfindungsgemässe Folie / PE
- Papier/ erfindungsgemässe Folie / Alu / erfindungsgemässe Folie / PE
- Papier/ erfindungsgemässe Folie / Alu / erfindungsgemässe Folie / PP

Diese mehrschichtigen Materialien sind hervorragend für die Herstellung von Beuteln zur Aufbewahrung von geröstetem Kaffee geeignet. Sie bieten einen hervorragenden Aromaschutz über mehrere Monate. Dies wird mit einem verbesserten Recycling gekoppelt, das eine sortenreine Trennung und Wiederverwertung der einzelnen Komponenten ermöglicht.

Grundsätzlich gelten die Aussagen, die im Zusammenhang mit der Folie gemacht wurden auch für die Herstellungsverfahren, das mehrschichtige Material und die Kapsel bzw. die Kaffeebeutel, soweit sinnvoll.

### Beispiele:

Eine Zusammensetzung umfassend 16 Gew.% PVOH, 4 % Glyzerin, 15 Gew.% Talkum als Mikropartikel (Finntalc M05SL) und 5 Gew.% Talkum als Nanopartikel (Nanoclay von Cloisite) wurde hergestellt indem eine Lösung von Polyvinylalkohol (SelvolTM 205 - 4 Gew. %) in Wasser einer wässrigen Dispersion von Mikropartikeln vermischt wurde und zu der erhaltenen Mischung eine wässrige Dispersion von Nanopartikeln zugegeben wurde. Zur schrittweisen homogenen Vermischung der Bestandteile mit der vorgelegten PVOH-Weichmacherlösung wurde ein Hochgeschwindigkeitsmixer eingesetzt. Diese Lösung wurde auf verschiedene bekannte Materialien als Beschichtung aufgetragen. Anschliessend die OTR (Sauerstofftransmissionsrate) gemessen. Die OTR ist die stationäre Rate, mit der Sauerstoffgas unter bestimmten Bedingungen (Temperatur und relative Luftfeuchtigkeit) durch die entsprechende Folie (gegebenenfalls aus mehreren Schichten) dringt. Die Testbedingungen waren 23°C und 50% Luftfeuchtigkeit.

### Folgende Ergebnisse wurden erhalten:

| Folie | Beschichtung aus der oben beschriebenen Zusammensetzung | Haftung | OTR 23/50 cm³/(m² · d·bar) |
|---|---|---|---|
| PE-Kaschierfolie, 60 µm | Einmalig 4 - 7 µm | gut | 3,8 - 4,9 |
| PE-Kaschierfolie, 60 µm | Zweimalig, insgesamt 7 - 10 µm | gut | 2,1 - 3,7 |
| PP soft, schwarz 100 µm** | Zweimalig, insgesamt 7 - 10 µm | sehr gut | 3,1-4,1 |
| ecovio^{®} (PBAT, PLA) 30 µm | keine | | 50-70 |
| Papier/Beschichtung/ 30 µm ecovio^{®} | Einmalig 4 - 7 µm | | 3,9 |
| Papier / 2 g/m² PVOH | keine | | 30 |
| Papier / 2 g/m² PVOH | Einmalig 3 - 3,5 µm | | 17 |
| Papier = PackPro 7, 80 g (Brigl & Bergmeister) | | | |

## Patentansprüche

1. Eine Folie, insbesondere für die Herstellung von Lebensmittelverpackungen, umfassend
30 - 89 Gew. % Polyvinylalkohol
10 - 50 Gew. % eines Schichtsilikats
1 - 30 Gew. % eines Weichmachers
**dadurch gekennzeichnet, dass** das Schichtsilikat in Form von Mikropartikeln und Nanopartikeln vorliegt.

2. Die Folie gemäß Anspruch 1, wobei das Schichtsilikat Talkum mit der chemischen Zusammensetzung Mg₃Si₄O₁₀(OH)₂ ist.

3. Die Folie gemäß Anspruch 1 oder 2, wobei das Schichtsilikat in Form von Mirko- und Nanopartikeln als Mischung aus Talkum und Montmorillonit, vorliegt.

4. Die Folie gemäß einem der vorherigen Ansprüche, wobei die Mikropartikel einen maximalen Durchmesser von 0.3 -5 µm und die Nanopartikel einen maximalen Durchmesser von 100 - 500 nm und eine Dicke von 2 bis 15 nm haben.

5. Ein mehrschichtiges Material, wobei mindestens eine Schicht des mehrschichtigen Materials aus einer Folie gemäß einem der Ansprüche 1 bis 4 besteht.

6. Das mehrschichtige Material gemäss Anspruch 5, wobei mindestens eine Schicht des mehrschichtigen Materials aus einer Folie gemäß einem der Ansprüche 1 bis 4 besteht und eine weitere Schicht oder weitere Schichten aus Papier oder einem Polymer bestehen.

7. Das mehrschichtige Material gemäß Anspruch 5 oder 6, wobei die Folie zwischen den weiteren Schichten als Zwischenschicht angeordnet ist.

8. Das mehrschichtige Material gemäss einem der Ansprüche 5 bis 7, wobei die weiteren Schichten aus PE, PP, EEA, PBS, PHB, Polybutylensuccinat, Polylactid und Polyhydroxyalkanoate oder einer Mischung aus PBAT und PLA bestehen.

9. Das mehrschichtige Material gemäß einem der Ansprüche 5 bis 8, wobei das Material zusätzlich Haftvermittlerschichten auf PVOH-Basis enthält.

10. Das mehrschichtige Material gemäß einem der Ansprüche 5 bis 7, bestehend aus einer Papierschicht, der Folie gemäß einem der Ansprüche 1 bis 4 und mindestens einer weiteren Schicht aus einem Polymer oder Polymergemisch, wobei die Folie gemäß einem der Ansprüche 1 bis 4 zwischen der Papierschicht und der weiteren Schicht aus einem Polymer oder Polymergemisch liegt.

11. Das mehrschichtige Material gemäß Anspruch 10, wobei die weitere Schicht aus einer Mischung aus PBAT und Polymilchsäure PLA oder aus EEA besteht.

12. Das mehrschichtige Material gemäss einem der Ansprüche 5 bis 7, wobei eine erste Schicht des mehrschichtigen Materials und eine zweite Schicht aus einer Folie gemäß einem der Ansprüche 1 bis 4 bestehen und eine weitere Schicht aus Aluminium besteht, wobei die Schicht aus Aluminium zwischen der ersten und der zweiten Schicht aus der Folie gemäß einem der Ansprüche 1 bis 4 liegt.

13. Eine Kapsel für ein Getränkezubereitungssystem, wobei die Kapsel eine Kapselwand umfasst, die das mehrschichtigen Material gemäß einem der Ansprüche 5 bis 11 umfasst.

14. Verfahren zum Herstellen der Folie nach einem der Ansprüche 1 - 4, umfassend die Schritte:
- Herstellen einer Zusammensetzung aus einer Dispersion von Nanopartikeln eines Schichtsilikats, einer Dispersion von Mikropartikeln des Schichtsilikats und einer Lösung von Polyvinylalkohol und einem Weichmacher indem man die Lösung von Polyvinylalkohol und einem Weichmacher mit der Dispersion von Mikropartikeln mischt und die Dispersion von Nanopartikeln hinzufügt und
- Extrusion einer Folie aus der Zusammensetzung.

15. Verfahren zum Herstellen des mehrschichtigen Materials nach einem der Ansprüche 5 bis 11, wobei die Schichten durch Co-extrusion zusammengefügt werden.
